# EUROPEAN PATENT APPLICATION

(11) **EP 2 981 048 A1**
(43) Date of publication of application: **03.02.2016**
(21) Application number: 14775633.2
(22) Date of filing: 13.03.2014
(51) Int. Cl.: H04M 1/00

(54) **INITIATOR TERMINAL, TARGET TERMINAL, METHOD OF INTERRUPTING ACCESS OF INITIATOR TERMINAL, AND METHOD OF INTERRUPTING ACCESS OF TARGET TERMINAL**

(30) Priority: 27.03.2013 JP 2013065898
(71) Applicant: Panasonic Intellectual Property Management Co., Ltd., Osaka-shi, Osaka 540-6207 (JP)
(72) Inventor: ARASHIN, Nobuhiko, Osaka-shi, Osaka 540-6207 (JP); YAMASAKI, Akira, Osaka-shi, Osaka 540-6207 (JP)
(74) Representative: Grünecker Patent- und Rechtsanwälte PartG mbB
(86) International application number: PCT/JP2014/001430
(87) International publication number: WO 2014/156020

(57) **Abstract**

An initiator terminal includes a wireless communication processor which connects with a target terminal via wireless communication, and an access processor which performs access protocol processing to get remote access to a storage medium included in the target terminal, and the access processor interrupts access when an error occurs during the access to the storage medium. A target terminal includes a storage medium, a wireless communication processor which connects with an initiator terminal via wireless communication, and an access processor which performs remote access protocol processing of permitting the initiator terminal to make remote access to the storage medium, and the access processor interrupts remote access when an error occurs while the initiator terminal accesses the storage medium.

## Description

### TECHNICAL FIELD

The present disclosure relates to a technique to conduct a transaction by connecting a storage medium, included in an external terminal which can communicate with a local terminal, to the local terminal, in the same way as access to a storage medium included in the local terminal.

### BACKGROUND

In recent years, moving and copying an enormous amount of data between information terminals is increasing. Conventional transfer methods of moving and copying data are widely used, such as a PAN (Personal Area Network) which is based on wired communication such as a USB (Universal Serial Bus) which is data transmission standards of a bus which connects information terminals by cables, and a Bridge Media such as an SD memory card which is detachable from an information terminal. A USB needs to be connected by a cable and an SD memory card is required insertion and removal from an information terminal, and therefore, a technique of connecting wirelessly between information terminals is being developed from a viewpoint of improvement in convenience.

For example, in a URL disclosed in NPL 1, standardization of a wireless USB is promoted as a wireless connection communication technique of an expanded USB, and the specifications of the wireless USB are released.

Further, it is demanded that wireless communication provides a communication rate equal to that of wired communication to reduce users' communication waiting time from a viewpoint of improvement in device usability. For example, assuming that connection used in the wired PAN whose communication rate exceeds 1 Gbps which is wired communication standards of USB 3.0 is replaced with wireless communication, a wireless PAN technique which uses a millimeter wave of 60 GHz band is standardized. More specifically, this standardization is carried out by IEEE802.15.3C and WiGig (WirelessGigabit) Alliance. WiGig Alliance particularly defines an expanded MAC (Medium Access Control) layer having backward compatibility to satisfy an old-generation function with respect to a definition of a MAC layer of IEEE802.11 standards which have already been standardized. WiGig Alliance is drawing up definition of IO-PAL (Protocol Adaptation Layer) as an upper layer of the expanded MAC layer to adapt a protocol of an IO bus such as a USB or PCI Express (Peripheral Component Interconnect Express). Standardization of a high-speed wireless connection communication technique is being drawn based on this architecture, and therefore IO bus protocol of existing wired connection allows wireless connection and is expected to become widely used.

PTL 1 discloses a configuration of conducting a transaction between two devices with a host function via network. A station included in a target device acquires configuration information of a target device from a host in response to a device handle acquisition request from an initiator device, and relays a transaction between the initiator device and the target device based on the configuration information without the host. Consequently, it is possible to improve a transaction communication rate.

### Citation List

### Patent Literature

PTL 1: International Publication No. 2012/127803

### Non-Patent Literature

NPL 1: "Wireless Universal Serial Bus Specification Revision 1.1", [online], USB Implementers Forum, Inc., [searched on November 16, 2010, Internet <URL:http://www.usb.org/developers/wusb/docs/wusb1/1/20100910.zip>

### SUMMARY OF THE INVENTION

An initiator terminal according to the present disclosure includes: a wireless communication processor which connects with a target terminal via wireless communication; and an access processor which performs access protocol processing to get remote access to a storage medium included in the target terminal. The access processor interrupts the access when an error occurs during the access to the storage medium.

Further, a target terminal according to the present disclosure includes: a storage medium; a wireless communication processor which connects with an initiator terminal via wireless communication; and an access processor which performs remote access protocol processing of permitting the initiator terminal to make remote access to the storage medium. The access processor interrupts the remote access when an error occurs while the initiator terminal accesses the storage medium.

According to the present disclosure, it is possible to avoid an error by interrupting remote access when the error occurs.

### BRIEF DESCRIPTION OF DRAWINGS

FIG. 1 is a view illustrating a configuration of a wireless communication system according to a first exemplary embodiment.
FIG. 2 is a block diagram illustrating a configuration of an initiator terminal and a target terminal according to the first exemplary embodiment.
FIG. 3 is a view for explaining a process of acquiring an access control right of a storage medium and a process of releasing the access control right via wireless communication according to the first exemplary embodiment.
FIG. 4 is a view for explaining a command (CMD: CoMmanD) packet of an access packet according to the first exemplary embodiment.
FIG. 5 is a view for explaining a command response (CMD Response) packet of the access packet according to the first exemplary embodiment.
FIG. 6 is a view for explaining a data (DATA) packet of the access packet according to the first exemplary embodiment.
FIG. 7 is a view for explaining an acknowledgment response (ACK: ACKnowledgement) packet of the access packet according to the first exemplary embodiment.
FIG. 8 is a view for explaining a check status (CHECK-STATUS) packet of the access packet according to the first exemplary embodiment.
FIG. 9 is a view for explaining an INT (INTerrupt) packet of the access packet according to the first exemplary embodiment.
FIG. 10 is a view for explaining a sequence of reading data from a storage medium via wireless communication according to the first exemplary embodiment.
FIG. 11 is a view for explaining a sequence in a case where lack of data occurs while the data is read from the storage medium via wireless communication according to the first exemplary embodiment.
FIG. 12 is a view for explaining a sequence in a case where a link down occurs while the data is read from the storage medium via wireless communication according to the first exemplary embodiment.
FIG. 13 is a view for explaining another sequence in a case where a link down occurs while the data is read from the storage medium via wireless communication according to the first exemplary embodiment.
FIG. 14 is a view illustrating a configuration of a wireless communication system according to a second exemplary embodiment.
FIG. 15 is a block diagram illustrating a configuration of an initiator terminal and a target terminal according to the second exemplary embodiment.
FIG. 16 is a view for explaining a command (CMD: CoMmanD) packet of an access packet according to the second exemplary embodiment.
FIG. 17 is a view for explaining a command response (CMD Response) packet of the access packet according to the second exemplary embodiment.
FIG. 18 is a view for explaining a data (DATA) packet of the access packet according to the second exemplary embodiment.
FIG. 19 is a view for explaining an acknowledgment response (ACK: ACKnowledgement) packet of the access packet according to the second exemplary embodiment.
FIG. 20 is a view for explaining a check status (CHECK-STATUS) packet of the access packet according to the second exemplary embodiment.
FIG. 21 is a view for explaining an INT (INTerrupt) packet of the access packet according to the second exemplary embodiment.
FIG. 22 is a view for explaining a sequence of reading data from a storage medium via wireless communication according to the second exemplary embodiment.
FIG. 23 is a view for explaining a sequence in a case where lack of data occurs while the data is read from the storage medium via wireless communication according to the second exemplary embodiment.
FIG. 24 is a view for explaining a sequence in a case where a link down occurs while the data is read from the storage medium via wireless communication according to the second exemplary embodiment.
FIG. 25 is a view for explaining another sequence in a case where a link down occurs while the data is read from the storage medium via wireless communication according to the second exemplary embodiment.

### DESCRIPTION OF EMBODIMENTS

Exemplary embodiments will be described in detail below optionally with reference to the drawings. However, the exemplary embodiments will not be described in detail more than necessary in some cases. For example, in some cases, matters which have already been well known and substantially same components will not be described again. This is to avoid the following description from being redundant more than necessary, and help those skilled in the art understand the following description.

In addition, the accompanying drawings and the following description are provided to make it easy for those skilled in the art to sufficiently understand the present disclosure, and do not intend to limit the subject matters recited in the claims.

### FIRST EXEMPLARY EMBODIMENT

According to a conventional technique, a configuration as in PTL 1, i.e., a station included in a target device acquires configuration information of a target device from a host in response to a device handle acquisition request from an initiator device, and relays a transaction between the initiator device and the target device based on the configuration information without the host. When an error such as lack of data or cutoff of wireless communication connection occurs while the transaction is relayed in this way, a memory access control right does not return to an adequate state.

An object of the present disclosure is to provide an initiator terminal and a target terminal which, when such an error occurs, return a memory access control right to an adequate state.

### <1-1. Configuration>

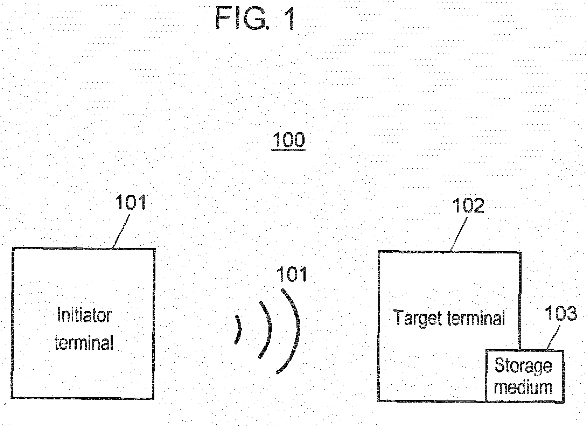

FIG. 1 is a view illustrating a configuration of a wireless communication system according to the present exemplary embodiment. In FIG. 1, wireless communication system 100 includes initiator terminal 101 and target terminal 102. Target terminal 102 includes storage medium 103. Initiator terminal 101 and target terminal 102 are connected to communicate with each other via wireless communication. For example, storage medium 103 is an SD memory card. For example, a wireless communication method is a wireless PAN which uses a millimeter wave of a 60 GHz band.

Further, initiator terminal 101 can make remote access to storage medium 103 included in target terminal 102 via wireless communication as if storage medium 103 were a storage medium included in initiator terminal 101. Target terminal 102 releases storage medium 103 to initiator terminal 101 when initiator terminal 101 accesses storage medium 103. Such an access method is referred to as a transparent access.

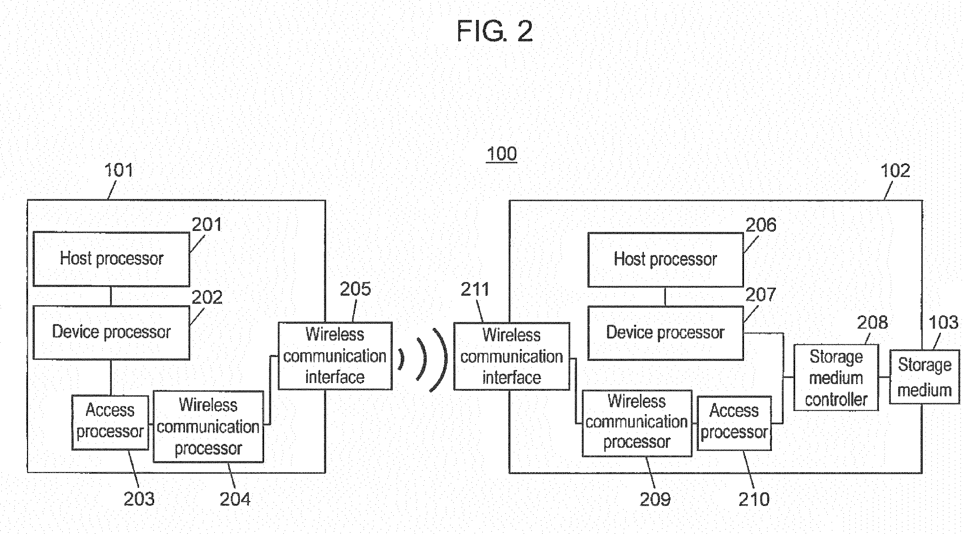

FIG. 2 is a block diagram illustrating a detailed configuration of initiator terminal 101 and target terminal 102. Initiator terminal 101 is configured to include host processor 201 which performs host function processing of making remote access to storage medium 103 of target terminal 102, device processor 202 which performs device function processing on storage medium 103 of target terminal 102, access processor 203 which performs processing of transmitting a command in a payload of a wireless communication method for accessing storage medium 103, and access protocol processing as processing of an initiator which outputs a command for accessing storage medium 103 of target terminal 102, wireless communication processor 204 which performs wireless communication protocol processing of performing communication by the wireless communication method, and wireless communication interface 205 which is a wireless communication circuit which physically performs wireless communication.

Further, target terminal 102 is configured to include host processor 206 which performs host function processing of accessing storage medium 103 included in target terminal 102, device processor 207 which performs device function processing on storage medium 103, storage medium controller 208 which switches between local and remote access control rights of storage medium 103, access processor 210 which performs processing of transmitting an access command in a payload of the wireless communication method to storage medium 103, and access protocol processing as processing of a target which enables access to access storage medium 103 of target terminal 102, wireless communication processor 209 which performs wireless communication protocol processing of performing communication by the wireless communication method, and wireless communication interface 211 which is a wireless communication circuit which physically performs wireless communication.

### <1-2. Access Control Right Acquisition Process and Release Process>

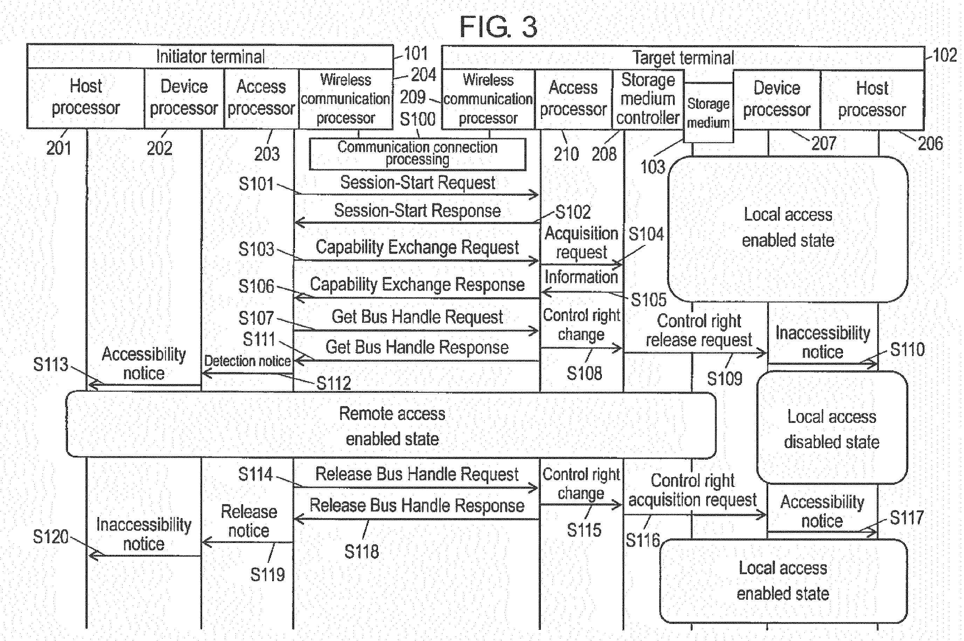

Next, a process performed until initiator terminal 101 acquires an access control right of storage medium 103 of target terminal 102 and can access storage medium 103 and a process performed until the access control right is released will be described. FIG. 3 is a view for explaining a process of acquiring an access control right of the storage medium and a process of releasing the access control right via wireless communication.

Target terminal 102 can access storage medium 103 until storage medium 103 is released for initiator terminal 101. That is, host processor 206 in target terminal 102 recognizes through device processor 207 that there is storage medium 103, and can read data stored in storage medium 103 and send a command to storage medium 103. This state is referred to as a local access enabled state.

(S100) Initiator terminal 101 and target terminal 102 are connected via wireless communication to allow initiator terminal 101 to access storage medium 103. Wireless communication connection is established between wireless communication processor 204 of initiator terminal 101 and wireless communication processor 209 of target terminal 102.

A process performed for this wireless communication connection does not matter as long as the process enables initiator terminal 101 and target terminal 102 to perform data communication using the wireless communication method.

Next, a process that initiator terminal 101 acquires an access control right of storage medium 103 of target terminal 102 will be described.

(S101) Access processor 203 of initiator terminal 101 transmits a session start request (Session-Start Request), to target terminal 102 using an access protocol. When target terminal 102 is in a state to accept access start, access processor 210 of target terminal 102 transmits a session start response (Session-Start Response) to initiator terminal 101. This processing starts a session.

Next, a process that initiator terminal 101 acquires information of storage medium 103 of target terminal 102 will be described.

(S103) Access processor 203 of initiator terminal 101 transmits a capability exchange request (Capability Exchange Request) to target terminal 102.

(S104) Access processor 210 of target terminal 102 makes an acquisition request for information of storage medium 103, to storage medium controller 208.

(S105) Access processor 210 acquires information from storage medium controller 208.

(S106) Access processor 210 which has acquired the information of storage medium 103 transmits a capability exchange response (Capability Exchange Response) to initiator terminal 101.

Next, a process that initiator terminal 101 acquires an access control right of storage medium 103 of target terminal 102 will be described.

(S107) Access processor 203 of initiator terminal 101 transmits a get bus handle request (Get Bus Handle Request) to target terminal 102.

(S108) Access processor 210 of target terminal 102 requests storage medium controller 208 to change the access control right of storage medium 103.

(S109) Storage medium controller 208 requests device processor 207 to release the access control right.

(S110) Device processor 207 gives a storage medium inaccessibility notice to host processor 206.

The above process disables host processor 206 to access storage medium 103 of target terminal 102. This state is referred to as a local access disabled state.

(S111) Access processor 210 which has requested storage medium controller 208 to change the access control right of storage medium 103 transmits to initiator terminal 101 a get bus handle response (Get Bus Handle Response) indicating that the access control right is released.

(S112) Next, access processor 203 which has received the get bus handle response (Get Bus Handle Response) from target terminal 102 gives a storage medium detection notice to device processor 202.

(S113) Device processor 202 which has received the storage medium detection notice gives a storage medium accessibility notice to host processor 201.

The above process places host processor 201 of initiator terminal 101 in the same state as a state as if storage medium 103 of target terminal 102 were connected to and inserted in initiator terminal 101, and allows host processor 201 to make transparent access via wireless communication. This state is referred to as remote access enabled state.

The above process is a process of acquiring an access control right.

Next, a process that initiator terminal 101 releases an access control right of storage medium 103 of target terminal 102 will be described.

(S114) When access to storage medium 103 in the remote access enabled state is finished, access processor 203 transmits a release bus handle request (Release Bus Handle Request) to target terminal 102.

(S115) Access processor 210 of target terminal 102 requests storage medium controller 208 to change the access control right of storage medium 103.

(S116) Storage medium controller 208 requests device processor 207 to acquire the access control right.

(S117) Device processor 207 gives a storage medium accessibility notice to host processor 206.

(S118) Access processor 210 which has requested storage medium controller 208 to change the access control right of storage medium 103 transmits to initiator terminal 101 a release bus handle response (Release Bus Handle Response) indicating that the access control right has been acquired.

(S119) Next, access processor 203 which has received the release bus handle response (Release Bus Handle Response) from target terminal 102 gives a storage medium release notice to device processor 202.

(S120) Device processor 202 which has received the storage medium release notice gives a storage medium inaccessibility notice to host processor 201.

The above process enables host processor 206 to access storage medium 103 of target terminal 102. Thus, the state returns to a local access enabled state again.

The above process is a process of releasing the access control right.

### <1-3. Data Format of Access Packet>

Next, a data format of an access packet used after initiator terminal 101 enters remote access enabled state with respect to storage medium 103 of target terminal 102 will be described. The access packet is encapsulated by a wireless communication packet, and always comes after a header of the wireless communication packet.

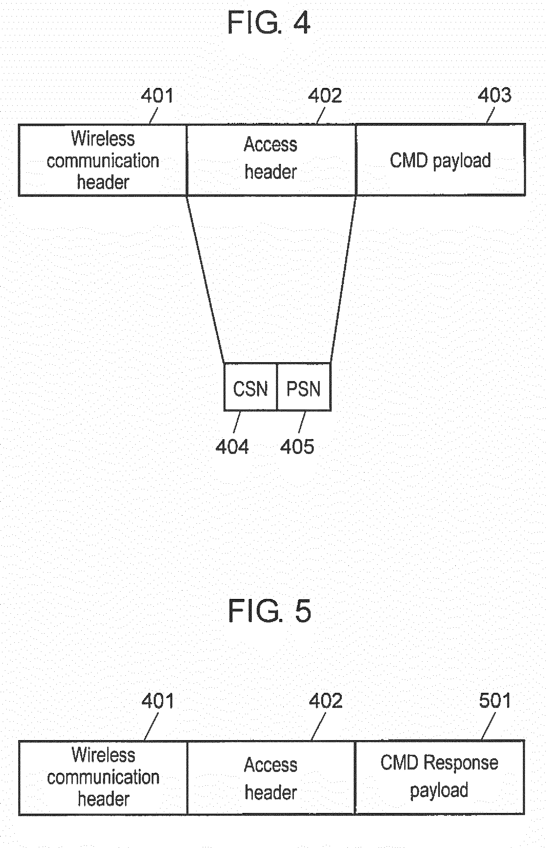

FIG. 4 is a view for explaining a format of a command packet of an access packet. In a command (CMD: CoMmanD) packet format, access header 402 comes after wireless communication header 401. Access header 402 includes CSN (Command Sequence Number) 404 indicating a sequence number of a command and PSN (Packet Sequence Number) 405 indicating a sequence number of the data packet. CSN 404 starts from 0 and is incremented every time a command is issued. PSN 405 starts from 0 and is incremented every time a data packet is issued.

CMD payload 403 indicating contents of an access command comes after access header 402. When initiator terminal 101 makes read access to storage medium 103 of target terminal 102, a read (Read) command is stored in this CMD payload, an incremented number is allocated to CSN 404 and a command packet in which 0 is stored in PSN 405 is issued.

FIG. 5 is a view for explaining a command response packet format of the access packet. Similar to the CMD packet format, access header 402 comes after wireless communication header 401 in a command response (CMD Response) packet format. CMD Response payload 501 subsequently comes after access header 402. Issuing this packet means that a new command is issued, and therefore a number of CSN 404 of the access header is incremented.

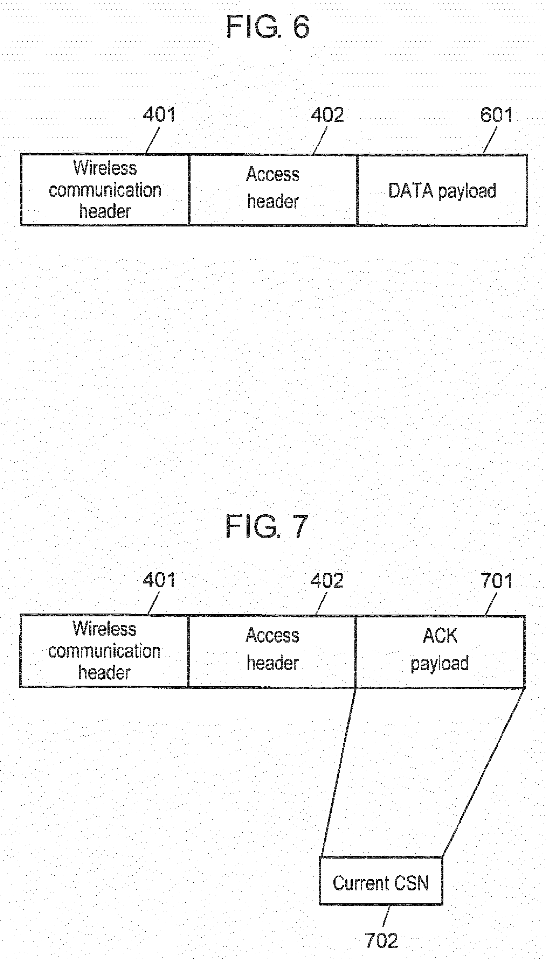

FIG. 6 is a view for explaining a data (DATA) packet format of the access packet. Similar to the CMD packet format, access header 402 comes after wireless communication header 401. DATA payload 601 subsequently comes after access header 402. Every time this packet is issued, a number of PSN 405 of access header 402 having the same number of CSN is incremented.

FIG. 7 is a view for explaining an acknowledgment response (ACK: ACKnowledgement) packet format of the access packet. The ACK packet is used to notify a transmission source terminal of that a DATA packet has arrived. Similar to the CMD packet format, access header 402 comes after wireless communication header 401. In the ACK packet, 0 is stored as a CSN and a PSN of access header 402. ACK payload 701 subsequently comes after access header 402. ACK payload 701 includes current (Current) CSN 702 in which a sequence number of a currently processed target command is stored.

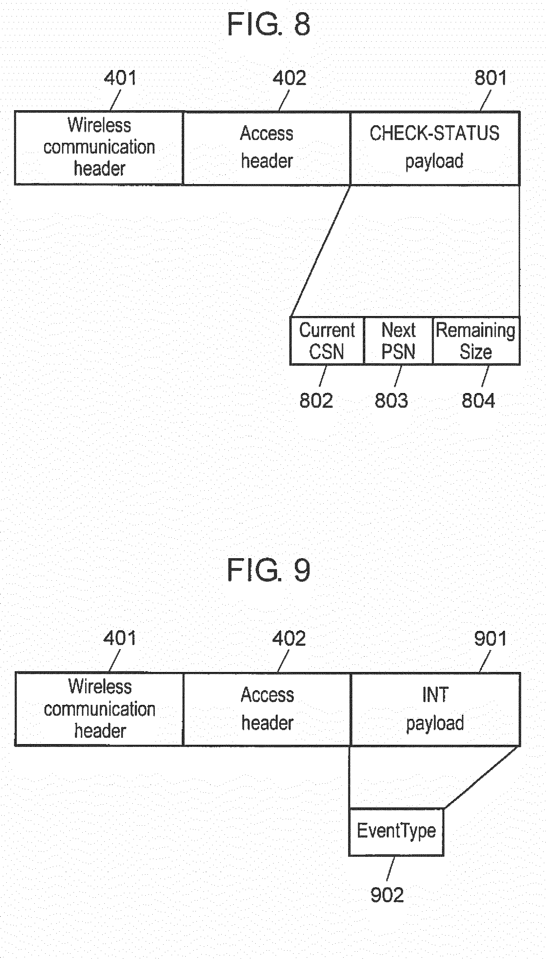

FIG. 8 is a view for explaining a check status (CHECK-STATUS) packet format of the access packet. The CHECK-STATUS packet is used for a notification purpose of confirming an arrival status of the data to a transmission source terminal. Similar to the CMD packet format, access header 402 comes after wireless communication header 401. In the CHECK-STATUS packet, 0 is stored as a CSN and a PSN of access header 402. CHECK-STATUS payload 801 subsequently comes after access header 402. CHECK-STATUS payload 801 includes current (Current) CSN 802, next (Next) PSN 803, and remaining size (Remaining Size) 804. In a Current CSN 802 field, a sequence number of a currently processed target command is stored. As Next PSN 803, a sequence number of a packet to be expected next is stored. Further, as Remaining Size 804, a remaining data size which needs to be processed is stored. When processing all items of data is finished, 0 is stored as Remaining Size.

FIG. 9 is a view for explaining an interrupt (INT: INTerrupt) packet format of an access packet. The INT packet is used for the purpose of notifying initiator terminal 101 of an interruption of an event from target terminal 102. Similar to the CMD packet format, access header 402 comes after wireless communication header 401. In the INT packet, 0 is stored as a CSN and a PSN of access header 402. INT payload 901 subsequently comes after access header 402. INT payload 901 includes event type (Event Type) 902 in which a type of an interruption target event set in advance is stored. For example, in a case of a PSN error due to packet loss or the like, a number of an event type corresponding to the PSN error such as 8 is stored.

### <1-4. Normal Operation in Dada Reading>

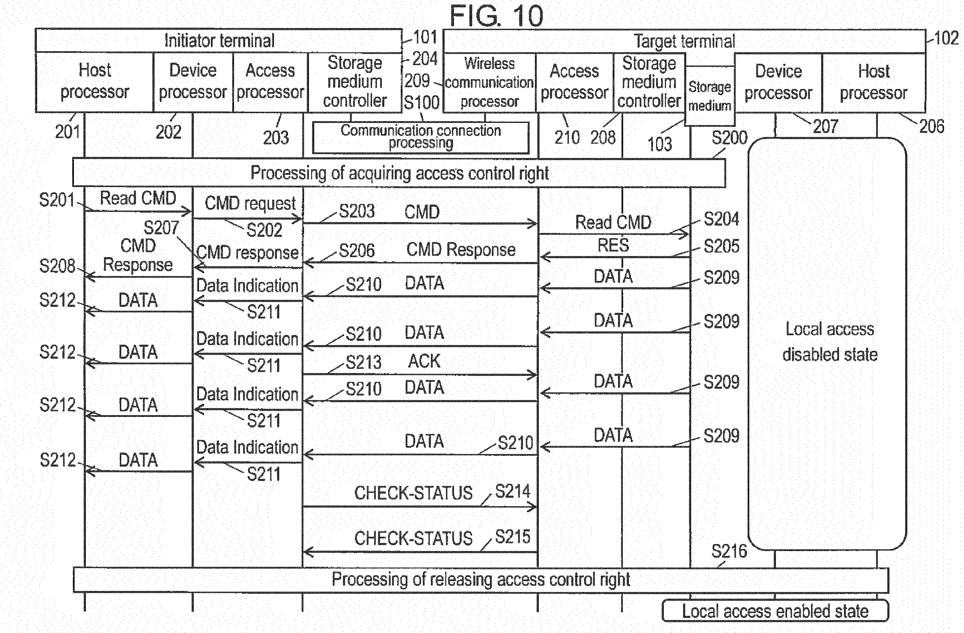

Next, a sequence in a case where initiator terminal 101 makes read access to storage medium 103 of target terminal 102 will be described. FIG. 10 is a view for explaining a sequence of reading data from the storage medium via wireless communication.

(S100) As already described, initiator terminal 101 and target terminal 102 are connected via wireless communication to allow initiator terminal 101 to access storage medium 103.

(S200) Further, as already described, initiator terminal 101 performs processing in S101 to S113 of acquiring an access control right of storage medium 103 of target terminal 102.

When initiator terminal 101 acquires the access control right of storage medium 103, initiator terminal 101 can access storage medium 103 of target terminal 102 through host processor 201.

Storage medium controller 208 of target terminal 102 requests device processor 207 of target terminal 102 to release the access control right of storage medium 103, and therefore device processor 207 of target terminal 102 cannot make access and the state enters a local access disabled state.

(S201) A read command (Read CMD) is issued from host processor 201 to device processor 202 such that initiator terminal 101 executes read processing to storage medium 103 of target terminal 102.

(S202) Device processor 202 issues a command request (CMD Request) to access processor 203.

(S203) Access processor 203 issues a command (CMD) to target terminal 102 via wireless communication. When the command is issued, 0 is stored as numbers stored as CSN 404 and PSN 405 of access header 402 of the CMD packet since the CMD packet is is the first access packet to be issued.

(S204) This command (CMD) arrives at target terminal 102, and access processor 210 interprets contents and issues a read command (Read CMD) to storage medium 103.

(S205) Storage medium 103 makes a response (RES: RESponse) to the read command, to access processor 210.

(S206) Access processor 210 transmits the response to the command (CMD), to initiator terminal 101 via wireless communication. The response to the command (CMD) is made using the command response (CMD Response) packet, the same number as that of CSN 404 of a CMD packet is stored as CSN 404 of access header 402 and therefore is 0, and a number stored as PSN 405 of access header 402 is 0 at all times.

(S207) Access processor 203 of initiator terminal 101 interprets a response (CMD Response) to the command, and issues a response (CMD response) to the command, to device processor 202.

(S208) Device processor 202 issues a response (CMD Response) to the command, to host processor 201.

(S209) Target terminal 102 has received the read command (Read CMD) and therefore reads data specified by the read command (Read CMD) from storage medium 103, and issues this data (DATA) to access processor 210.

(S210) Access processor 210 stores the data read from storage medium 103, in a DATA packet, and issues the DATA packet to initiator terminal 101 via wireless communication. In this case, 0 is stored as CSN 404 of access header 402 corresponding to the read command (Read CMD), and 0 is incremented and 1 is stored as PSN 405 of access header 402.

(S211) Access processor 203 of initiator terminal 101 interprets the DATA packet, issues a data indication (Data Indication) indicating an arrival of data to device processor 202 and notifies device processor 202 of the arrival of the data. Access processor 203 subtracts the size of the received data from a size of data requested to storage medium 103, and holds a remaining data size.

(S212) Device processor 202 has data (DATA) arrived at host processor 201.

Until all items of data are read, i.e., until the remaining data size becomes 0 in S211, processing in S209 to S212 is repeated. In an example in FIG. 10, the processing in S209 to S212 is performed four times. PSN 405 of access header 402 is incremented in a DATA packet every time the DATA packet is issued from access processor 210 to initiator terminal 101.

(S213) While initiator terminal 101 reads data from storage medium 103, access processor 203 sends an acknowledgment response (ACK) indicating that data is accurately read to access processor 210. In the example in FIG. 10, access processor 203 sends the ACK response after reading second data (DATA). CSN 404 and PSN 405 of access header 402 of an ACK packet are 0.

In addition, sending of this ACK may be predetermined number of times and sending timing of this ACK may be an arbitrary, if during the acquisition of an access control right of initiator terminal 101.

(S214) When all items of data requested to storage medium 103 are read, access processor 203 of initiator terminal 101 issues a check status (CHECK-STATUS) indicating that all items of data have been received, to target terminal 102. In a check status packet, 0 is stored as CSN 404 and PSN 405 of access header 402. Further, as Remaining Size 804, 0 indicating that there is no remaining data size of data requested to storage medium 103 is stored. Further, 0 which is a currently processed CSN is stored as Current CSN 802, and 5 which is a next PSN is stored as Next PSN 803.

(S215) Access processor 210 of target terminal 102 which has received CHECK-STATUS from initiator terminal 101 transmits a check status (CHECK-STATUS) to initiator terminal 101. 0 is stored as CSN 404 and PSN 405 of access header 402 in the check status packet, and 0 is stored as Remaining Size. Further, 0 which is a currently processed CSN is stored as Current CSN 802, and 5 which is a next PSN is stored as Next PSN 803.

(S216) Initiator terminal 101 which has received desired data from storage medium 103 of target terminal 102 performs processing of releasing an access control right of storage medium 103. As already described, initiator terminal 101 performs processing in S114 to S120 of releasing the access control right of storage medium 103 of target terminal 102.

When the processing of releasing the access control right is finished, the access control right of storage medium 103 returns to target terminal 102, and the state transits to a local access enabled state.

In addition, target terminal 102 returned CMD Response and the first DATA in separate packets for response to the command from host processor 201, yet target terminal 102 may return CMD Response and the first DATA included in the same packet to initiator terminal 101.

The sequence in the case where initiator terminal 101 normally makes read access to storage medium 103 of target terminal 102 without an error has been described above.

### <1-5. Error Recovery Operation When Lack of Data>

Next, error recovery processing in a case where data lacks while the data is read will be described.

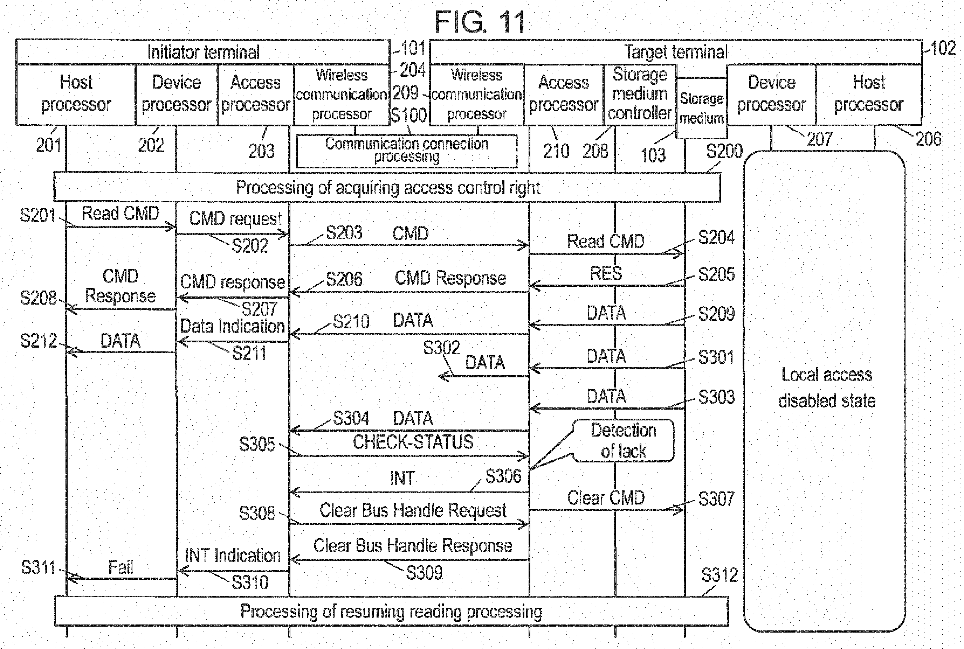

FIG. 11 is a view for explaining a sequence in a case where data lacks while initiator terminal 101 reads data from storage medium 103 of target terminal 102 via wireless communication. The wireless communication connection processing in S100, the access control right acquisition processing in S200, the processing in S201 to S208 and the processing in S209 to S212 of transmitting the first DATA are as described above.

(S301) Second data (DATA) is issued from storage medium 103 to access processor 210.

(S302) Access processor 210 stores the data read from storage medium 103, in a DATA packet, and issues the DATA packet to initiator terminal 101 via wireless communication. In this regard, 0 is stored as CSN 404 of access header 402, and 1 is incremented and 2 is stored as PSN 405 of access header 402. Here, the issued data lacks without being transmitted to initiator terminal 101. Hence, the processing in S211 and S212 is not performed.

(S303) Third data (DATA) is issued from storage medium 103 to access processor 210.

(S304) Access processor 210 stores the data read from storage medium 103, in a DATA packet, and issues the DATA packet to initiator terminal 101 via wireless communication. In this case, 0 is stored as CSN 404 of access header 402, and 2 is incremented and 3 is stored as PSN 405 of access header 402.

(S305) Access processor 203 of initiator terminal 101 interprets the DATA from target terminal 102. PSN 405 of access header 402 in the DATA packet is 3, and therefore it is detected that DATA whose PSN 405 is 2 is not received.

Access processor 203 issues CHECK-STATUS to target terminal 102. In the CHECK-STATUS packet, 0 is stored as CSN 404 and PSN 405 of access header 402, 0 which is a currently processed CSN is stored as Current CSN 802, and 2 which is a PSN to be expected next is stored as Next PSN 803. Further, a total data amount to be expected is stored as Remaining Size 804.

(S306) Access processor 210 which has received CHECK-STATUS from initiator terminal 101 determines that a packet has lacked since PSN 405 of access header 402 in the data packet which has been lately output has been 3, yet PSN 405 expected by initiator terminal 101 is 2.

When determining that the packet has lacked, access processor 210 outputs INT to initiator terminal 101. In an INT packet, 0 is stored as CSN 404 and PSN 405 of access header 402, and a number indicating a PSN error is stored as Event Type 902 of INT payload 901.

(S307) Further, access processor 210 issues Clear CMD which means clear a read command, to storage medium 103, and returns storage medium 103 to a state where storage medium 103 can accept a command. Thus, storage medium 103 enters a waiting state for a next command. This Clear CMD is a command such as "CMD 12" when, for example, storage medium 103 is an SD card.

(S308) Access processor 203 of initiator terminal 101 which has received INT from target terminal 102 transmits a clear bus handle request (Clear Bus Handle Request).

(S309) When receiving the clear bus handle request, access processor 210 of target terminal 102 transmits a clear bus handle response (Clear Bus Handle Response) to initiator terminal 101.

(S310) Access processor 203 of initiator terminal 101 which has received the clear bus handle response notifies device processor 202 of an INT indication (INT Indication) indicating an interruption.

(S311) Device processor 202 notifies host processor 201 of that reading data has failed (Fail).

(S312) Host processor 201 which has received this notice issues a read command (Read CMD) to device processor 202 to resume read processing. More specifically, host processor 201 resumes the read processing in S201 to S215.

As described above, by detecting lack of data by checking numbers of CSN 404 and PSN 405 of access header 402, and by issuing a clear command to storage medium 103, initiator terminal 101 can resume read processing.

### <1-6. Error Recovery Operation When Link Down (1)>

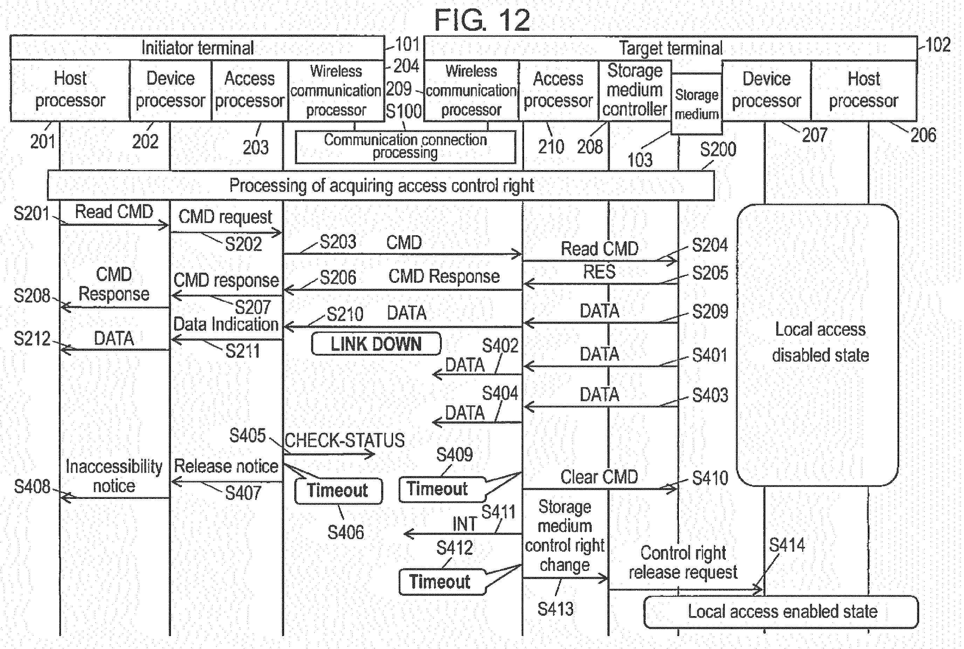

Next, a sequence in a case where a link down (LINK DOWN) which disables wireless communication during data read processing occurs will be described. FIG. 12 is a view for explaining a sequence in a case where the link down occurs while data is read from the storage medium via wireless communication. The wireless communication connection processing in S100, the access control right acquisition processing in S200, the processing in S201 to S208, and the processing in S209 to S212 of transmitting the first DATA are as described above. It is assumed that the link down occurs after transmission of the first DATA is finished.

In this regard, access processor 203 of initiator terminal 101 and access processor 210 of target terminal 102 each have a timeout function of interrupting processing when a reply to a lately issued packet does not arrive within a predetermined time from a transmission destination.

(S401) Second data (DATA) is issued from storage medium 103 to access processor 210.

(S402) Access processor 210 stores the data read from storage medium 103, in a DATA packet, and issues the DATA packet to initiator terminal 101 via wireless communication. In this regard, 0 is stored as CSN 404 of access header 402, and 1 is incremented and 2 is stored as PSN 405 of access header 402. Here, the issued data lacks without being transmitted to initiator terminal 101. Hence, the processing in S211 and S212 is not performed.

(S403) Third data (DATA) is issued from storage medium 103 to access processor 210.

(S404) Access processor 210 stores the data read from storage medium 103, in a DATA packet, and issues the DATA packet to initiator terminal 101 via wireless communication. In this case, 0 is stored as CSN 404 of access header 402, and 2 is incremented and 3 is stored as PSN 405 of access header 402. Here, the issued data lacks without being transmitted to initiator terminal 101. Hence, the processing in S211 and S212 is not performed.

(S405) Access processor 203 issues CHECK-STATUS to target terminal 102 since data does not arrive. In the CHECK-STATUS packet, 0 is stored as CSN 404 and PSN 405 of access header 402, 0 which is a currently processed CSN is stored as Current CSN 802, and 2 which is a PSN to be expected next is stored as Next PSN 803. Further, a total data amount to be expected is stored as Remaining Size 804.

(S406) When not receiving a response to CHECK-STATUS (S404) transmitted to target terminal 102 even after waiting for a predetermined time, access processor 203 determines that timeout has occurred.

(S407) Access processor 203 issues a storage medium release notice to device processor 202.

(S408) Device processor 202 issues a storage medium inaccessibility notice to host processor 201. Initiator terminal 101 cannot access storage medium 103.

(S409) Meanwhile, target terminal 102 does not receive ACK or CHECK-STATUS in response to data transmitted to initiator terminal 101, and therefore determines that the timeout has occurred.

(S410) Access processor 210 issues Clear CMD for clearing a command to storage medium 103, and returns storage medium 103 to a state where storage medium 103 can accept a command. Thus, storage medium 103 can accept a next command.

(S411) Next, access processor 210 issues INT to initiator terminal 101 to interrupt processing.

(S412) Since this INT also lacks due to the wireless communication link down and does not arrive at initiator terminal 101 and there is no response from initiator terminal 101, it is determined that a timeout has occurred.

(S413) Subsequently, access processor 210 issues a storage medium access control right change request to storage medium controller 208.

(S414) Storage medium controller 208 issues an access control right release request to device processor 207, and thereby host processor 206 of target terminal 102 can access storage medium 103.

Since the above processing is executed, when a link down which disconnects a wireless communication link between initiator terminal 101 and target terminal 102 occurs, and communication cannot be performed with each other, it is possible to return the access control right of storage medium 103 to target terminal 102 by finishing processing of initiator terminal 101 and target terminal 102.

### <1-7. Error Recovery Operation When Link Down (2)>

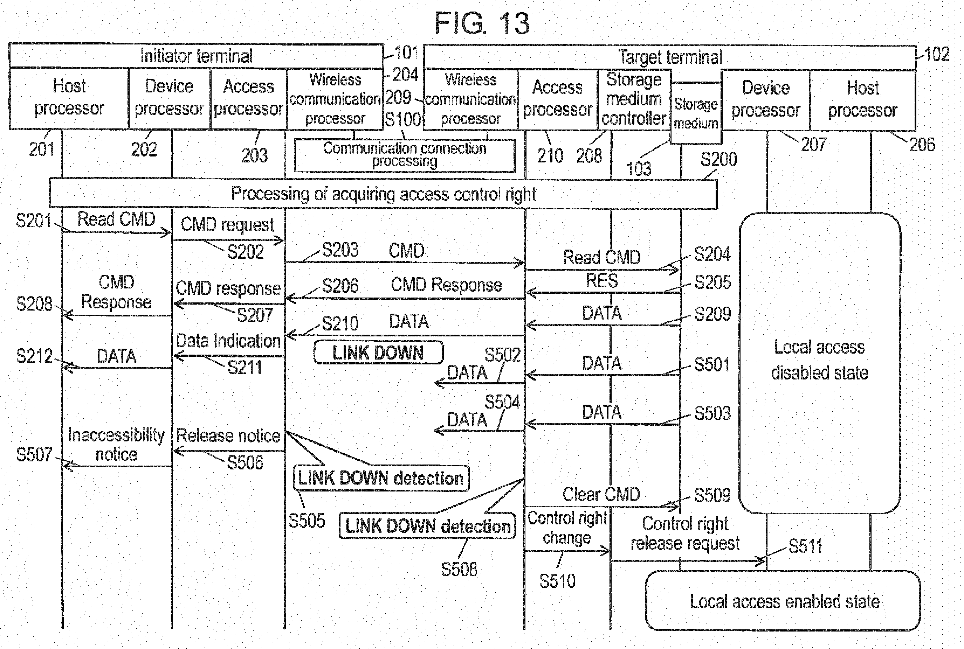

Further, another sequence in a case where a link down (LINK DOWN) which disables wireless communication during data read processing occurs will be further described. FIG. 13 is a view for explaining another sequence in a case where the link down occurs while data is read from the storage medium via wireless communication.

The wireless communication in S100, the access control right acquisition processing in S200, the processing in S201 to S208 and the processing in S209 to S212 of transmitting the first DATA are as described above. It is assumed that the link down occurs after transmission of the first DATA is finished.

In this regard, access processor 203 of initiator terminal 101 and access processor 210 of target terminal 102 each have a function of managing a wireless communication link state.

(S501) Second data (DATA) is issued from storage medium 103 to access processor 210.

(S502) Access processor 210 stores the data read from storage medium 103, in a DATA packet, and issues the DATA packet to initiator terminal 101 via wireless communication. In this regard, 0 is stored as CSN 404 of access header 402 and 1 is incremented and 2 is stored as PSN 405 of access header 402. Here, the issued data lacks without being transmitted to initiator terminal 101. Hence, the processing in S211 and S212 is not performed.

(S503) Third data (DATA) is issued from storage medium 103 to access processor 210.

(S504) Access processor 210 stores the data read from storage medium 103, in a DATA packet, and issues the DATA packet to initiator terminal 101 via wireless communication. In this case, 0 is stored as CSN 404 of access header 402, and 2 is incremented and 3 is stored as PSN 405 of access header 402. Here, the issued data lacks without being transmitted to initiator terminal 101. Hence, the processing in S211 and S212 is not performed.

(S505) Access processor 203 of initiator terminal 101 detects a wireless communication link down.

(S506) When detecting the link down, access processor 203 issues a storage medium release notice to device processor 202.

(S507) Device processor 202 issues a storage medium inaccessibility notice to host processor 201. Initiator terminal 101 cannot access storage medium 103.

(S508) Access processor 210 of target terminal 102 detects the wireless communication link down.

(S509) When detecting the link down, access processor 210 issues Clear CMD for clearing a command to storage medium 103, and returns storage medium 103 to a state where storage medium 103 can accept a command. Storage medium 103 can accept a next command.

(S510) Subsequently, access processor 210 issues a storage medium access control right change request to storage medium controller 208.

(S511) Storage medium controller 208 issues an access control right release request to device processor 207, and thereby host processor 206 of target terminal 102 can access storage medium 103.

According to the above processing, even when a wireless communication link down occurs, it is possible to detect a link down and recover an error. Further, when data does not arrive, storage medium 103 can accept a command, and, by returning an access control right, it is possible to avoid a situation that target terminal 102 cannot access storage medium 103.

### <1-8. Effect>

As described above, according to the present exemplary embodiment, initiator terminal 101 has wireless communication processor 204 which connects with target terminal 102 via wireless communication, and access processor 203 which performs access protocol processing to get remote access to storage medium 103 included in target terminal 102. Access processor 203 interrupts access when an error occurs during the access to the storage medium. Target terminal 102 has storage medium 103, wireless communication processor 209 which connects with initiator terminal 101 via wireless communication, and access processor 210 which performs remote access protocol processing of permitting initiator terminal 101 to make remote access to storage medium 103. When an error occurs while initiator terminal 101 accesses storage medium 103 access processor 203 interrupts the remote access.

Thus, it is possible to avoid an error by interrupting remote access when an error occurs.

Further, in initiator terminal 101 according to the present exemplary embodiment, access processor 203 transmits a packet for checking whether or not an error which occurs during access to storage medium 103 is due to lack of read data. In target terminal 102, when the error which occurs while initiator terminal 101 accesses storage medium 103 is due to lack of data, access processor 210 clears a command issued to storage medium 103.

Thus, initiator terminal 101 can resume read processing.

Further, in initiator terminal 101 according to the present exemplary embodiment, access processor 203 releases storage medium 103 from the access when there is no response within a predetermined time from target terminal 102 during the access to storage medium 103, and finishes the remote access. In target terminal 102, access processor 210 clears a command issued to storage medium 103 when there is no response within a predetermined time from initiator terminal 101 while initiator terminal 101 accesses storage medium 103, and finishes the remote access to storage medium 103.

Thus, when a link down which disconnects a wireless communication link between initiator terminal 101 and target terminal 102 occurs, and communication cannot be performed with each other, it is possible to return the access control right of storage medium 103 to target terminal 102 by finishing processing of initiator terminal 101 and target terminal 102.

### SECOND EXEMPLARY EMBODIMENT

The second exemplary embodiment will be described below. A main difference from the first exemplary embodiment is an access packet format between an initiator terminal and a target terminal.

### <2-1. Configuration>

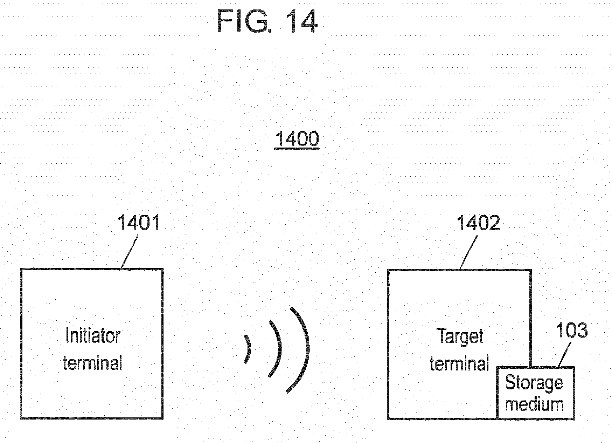

FIG. 14 is a view illustrating a configuration of a wireless communication system according to the present exemplary embodiment. In FIG. 14, wireless communication system 1400 includes initiator terminal 1401 and target terminal 1402. Target terminal 1402 includes storage medium 103. Storage medium 103 is the same configuration as that of the first exemplary embodiment. Initiator terminal 1401 and target terminal 1402 are connected to communicate with each other via wireless communication. For example, storage medium 103 is an SD memory card. For example, a wireless communication method is, a wireless PAN which uses a millimeter wave of a 60 GHz band.

Further, initiator terminal 1401 can make remote access to storage medium 103 included in target terminal 1402 via wireless communication as if storage medium 103 were a storage medium included in initiator terminal 1401. Target terminal 1402 releases storage medium 103 to initiator terminal 1401 when initiator terminal 1401 accesses storage medium 103. Such an access method is referred to as transparent access.

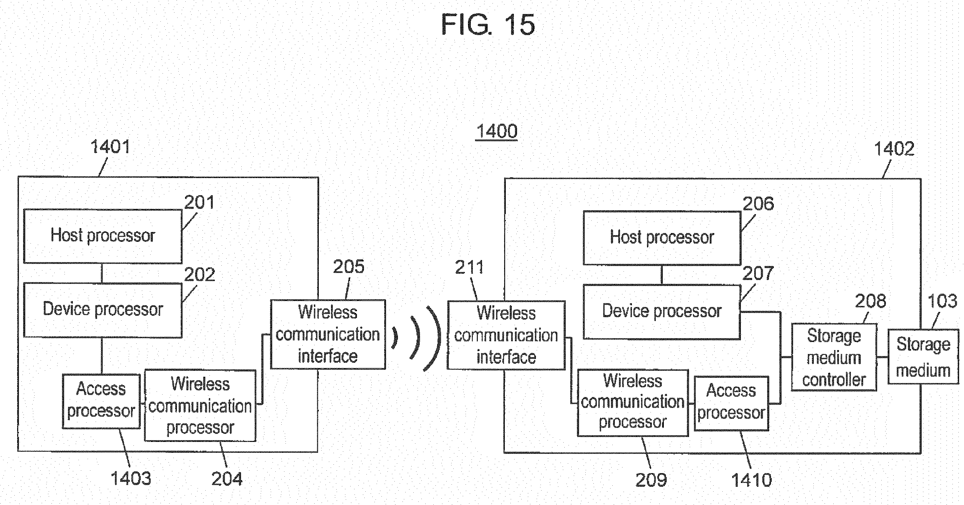

FIG. 15 is a block diagram illustrating a detailed configuration of initiator terminal 1401 and target terminal 1402. The substantially same components as those of the first exemplary embodiment will be assigned the same reference numerals and will not be described, and different components will be mainly described. Access processor 1403 of initiator terminal 1401 differs from a component of the first exemplary embodiment. Access processor 1403 performs processing of transmitting a command in a payload of a wireless communication method for accessing storage medium 103 and performs processing of access protocol as an initiator which outputs a command for accessing storage medium 103 of target terminal 1402.

Further, access processor 1410 of target terminal 1402 differs from a component of the first exemplary embodiment. Access processor 1410 performs processing of transmitting an access command in a payload of the wireless communication method to storage medium 103 and performs processing of access protocol as a target which enables access to storage medium 103 of target terminal 1402.

### <2-2. Access Control Right Acquisition Process and Release Process>

A process performed until initiator terminal 1401 acquires an access control right of storage medium 103 of target terminal 1402 and can access storage medium 103 and a process performed until the access control right is released are the same as a process of acquiring an access control right of a storage medium and a process of releasing the access control right via wireless communication described in the first exemplary embodiment with reference to FIG. 3. Hence, the operation of access processor 1403 is the same as an operation of access processor 203, and an operation of access processor 1410 is the same as an operation of access processor 210.

### <2-3. Data Format of Access Packet>

Next, a data format of an access packet used after initiator terminal 1401 enters remote access enabled state with respect to storage medium 103 of target terminal 1402 will be described. The access packet is encapsulated by a wireless communication packet, and always comes after a header of the wireless communication packet. Again, the substantially same components as those of the first exemplary embodiment will be also assigned the same reference numerals and will not be described, and different components will be mainly described.

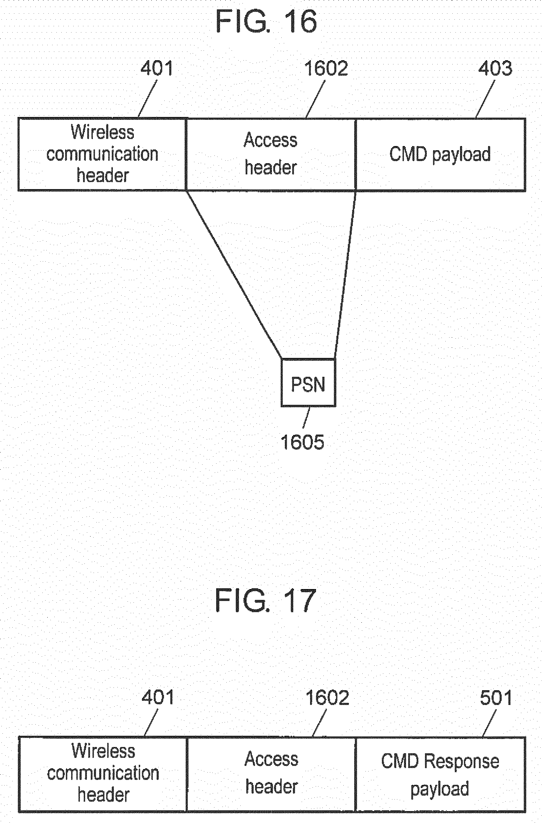

FIG. 16 is a view for explaining a command packet format of an access packet. In a command (CMD: CoMmanD) packet format, access header 1602 comes after wireless communication header 401. Access header 1602 includes PSN (Packet Sequence Number) 1605 indicating a sequence number of a data packet. PSN 1605 starts from 0 and is incremented every time a data packet is issued.

CMD payload 403 indicating contents of an access command comes after access header 1602. When initiator terminal 1401 makes read access to storage medium 103 of target terminal 1402, a read (Read) command is stored in this CMD payload and a command packet in which 0 is stored in PSN 1605 is issued.

FIG. 17 is a view for explaining a command response packet format of the access packet. Similar to the CMD packet format, in a command response (CMD Response) packet format, access header 1602 comes after wireless communication header 401. CMD Response payload 501 subsequently comes.

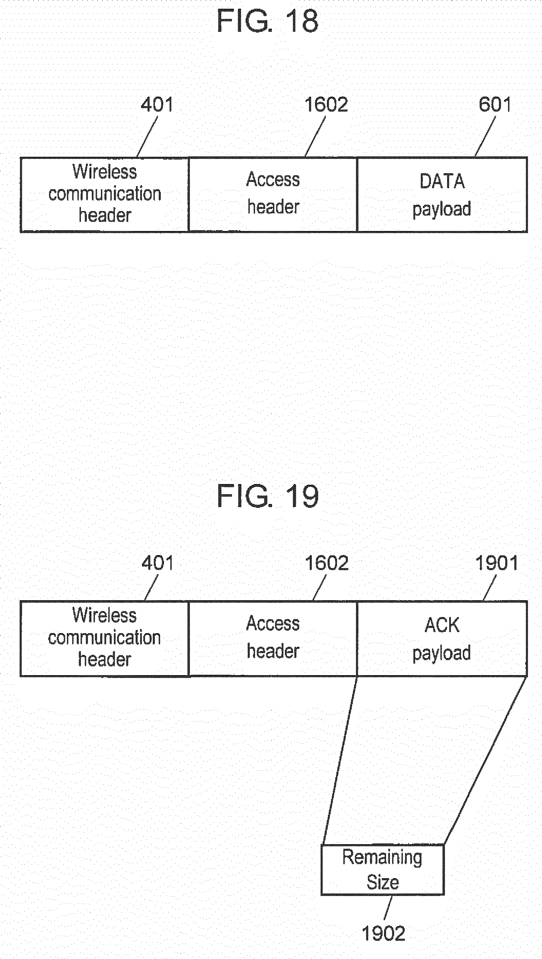

FIG. 18 is a view for explaining a data (DATA) packet format of the access packet. Similar to the CMD packet format, access header 1602 comes after wireless communication header 401. DATA payload 601 subsequently comes after access header 1602.

FIG. 19 is a view for explaining an acknowledgment response (ACK: ACKnowledgement) packet format of the access packet. The ACK packet is used to notify a transmission source terminal of that a DATA packet has arrived. Similar to the CMD packet format, access header 1602 comes after wireless communication header 401. In the ACK packet, 0 is stored as a PSN of access header 1602. ACK payload 1901 subsequently comes after access header 1602. ACK payload 1901 includes remaining size (Remaining Size) 1902 in which a remaining data size which needs to be processed is stored. When processing all items of data is finished, 0 is stored as Remaining Size 1902.

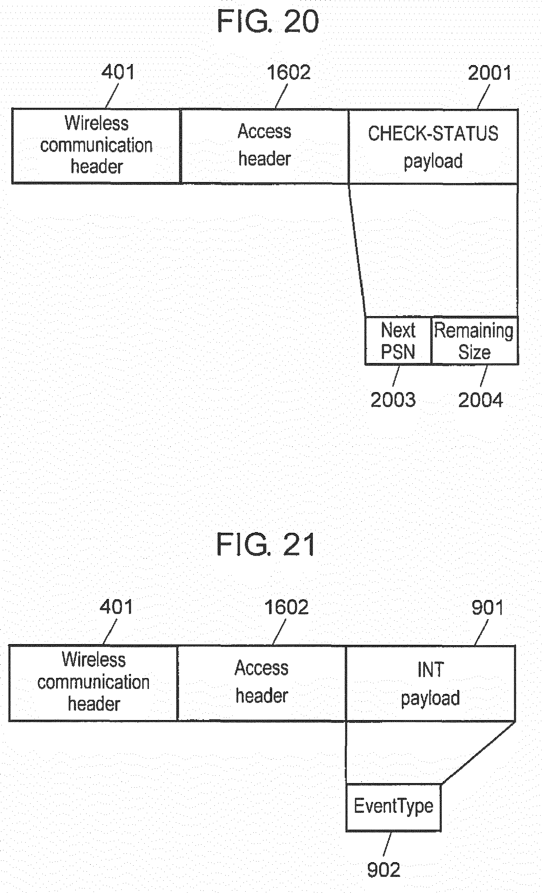

FIG. 20 is a view for explaining a check status (CHECK-STATUS) packet format of the access packet. The CHECK-STATUS packet is used for a notification purpose of confirming an arrival status of the data to a transmission source terminal. Similar to the CMD packet format, access header 1602 comes after wireless communication header 401. In the CHECK-STATUS packet, 0 is stored as a PSN of access header 1602. CHECK-STATUS payload 2001 subsequently comes after access header 1602. CHECK-STATUS payload 2001 includes next (Next) PSN 2003 and remaining size (Remaining Size) 2004. As Next PSN 2003, a sequence number of a packet to be expected next is stored. Further, as Remaining Size 2004, a remaining data size which needs to be processed is stored. When processing all items of data is finished, 0 is stored as Remaining Size 1902.

FIG. 21 is a view for explaining an interrupt (INT: INTerrupt) packet format of an access packet. The INT packet is used for the purpose of notifying initiator terminal 1401 of an interruption of an event from target terminal 1402. Similar to the CMD packet format, access header 1602 comes after wireless communication header 401. In the INT packet, 0 is stored as a PSN of access header 1602. INT payload 901 is subsequently comes after access header 1602. INT payload 901 includes event type (Event Type) 902 in which a type of an interruption target event set in advance is stored. For example, in a case of a PSN error due to packet loss or the like, a number of an event type corresponding to the PSN error such as 8 is stored.

### <2-4. Normal Operation in Data Reading>

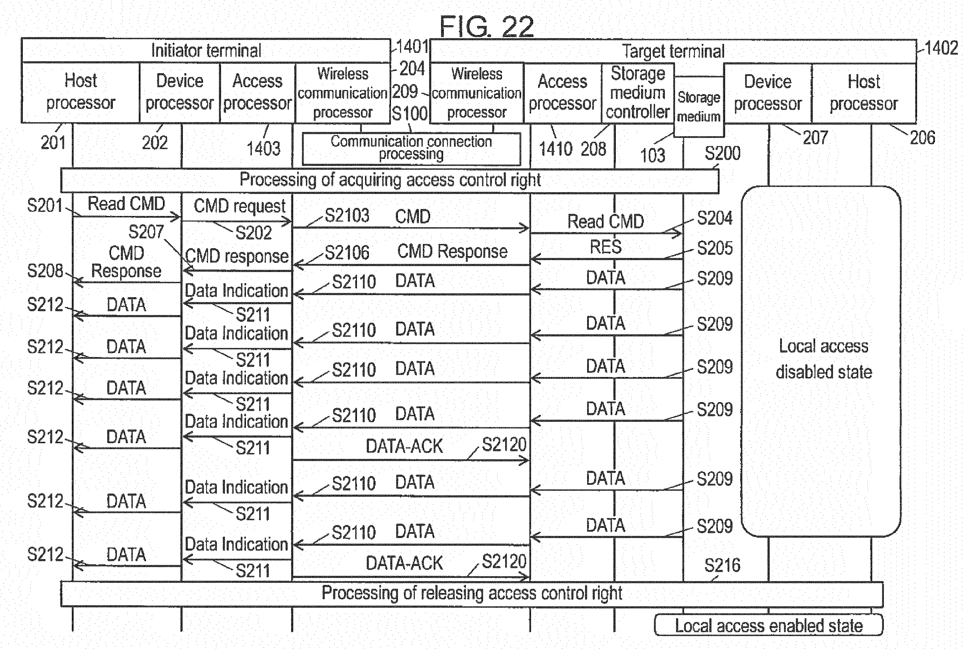

Next, a sequence in a case where initiator terminal 1401 makes read access to storage medium 103 of target terminal 1402 will be described. FIG. 22 is a view for explaining a sequence of reading data from the storage medium via wireless communication. The substantially same operations as those of the first exemplary embodiment will be assigned the same step numbers.

(S100) As already described, initiator terminal 1401 and target terminal 1402 are connected via wireless communication to allow initiator terminal 1401 to access storage medium 103.

(S200) Further, as already described, initiator terminal 1401 performs processing in S101 to S113 of acquiring an access control right of storage medium 103 of target terminal 1402.

When initiator terminal 1401 acquires the access control right of storage medium 103, initiator terminal 1401 can access storage medium 103 of target terminal 1402 through host processor 201.

Storage medium controller 208 of target terminal 1402 requests device processor 207 of target terminal 1402 to release the access control right of storage medium 103, and therefore device processor 207 of target terminal 1402 cannot make access and the state enters a local access disabled state.

(S201) A read command (Read CMD) is issued from host processor 201 to device processor 202 such that initiator terminal 1401 executes read processing from storage medium 103 of target terminal 1402. Data to be read from storage medium 103 is 45 kB.

(S202) Device processor 202 issues a command request (CMD Request) to access processor 1403.

(S2103)Access processor 1403 issues a command (CMD) to target terminal 1402 via wireless communication. When the command is issued, 0 is stored as PSN 1605 of access header 1602 in the CMD packet since the CMD packet is the first access packet to be issued.

(S204) This command (CMD) arrives at target terminal 1402, and access processor 1410 interprets contents and issues a read command (Read CMD) to storage medium 103.

(S205) Storage medium 103 makes a response (RES: RESponse) to the read command, to access processor 1410.

(S2106)Access processor 1410 transmits the response to the command (CMD), to initiator terminal 1401 via wireless communication. The response to the command (CMD) is made using a response (CMD Response) packet, and a number stored as PSN 1605 of access header 1602 is 0.

(S207) Access processor 1403 of initiator terminal 1401 interprets the response (CMD Response) to the command, and issues a response (CMD response) to the command, to device processor 202.

(S208) Device processor 202 issues a response (CMD Response) to the command, to host processor 201.

(S209) Target terminal 1402 has received the read command (Read CMD), and therefore reads data specified by the read command (Read CMD) from storage medium 103 and issues this data (DATA) to access processor 1410. The amount of data transmitted at a time is 7.5 kB.

(S2110)Access processor 1410 stores the data read from storage medium 103, in a DATA packet, and issues the DATA packet to initiator terminal 1401 via wireless communication. In this case, 0 is incremented, and 1 is stored as PSN 1605 of access header 1602.

(S211) Access processor 1403 of initiator terminal 1401 interprets the DATA packet, issues a data indication (Data Indication) indicating an arrival of data to device processor 202 and notifies device processor 202 of the arrival of data. Access processor 1403 subtracts the size of the received data from the size of data requested to storage medium 103, and holds a remaining data size. That is, access processor 1403 holds remaining 37.5 kB by subtracting the amount of received data of 7.5 kB from 45 kB.

(S212) Device processor 202 has data (DATA) arrived at host processor 201.

Until all items of data are read, i.e., until the remaining data size becomes 0 in S211, the processing in S209, S2110, S211 and S212 is repeated. In an example in FIG. 22, the processing in S209, S2110, S211 and S212 is performed six times. PSN 1605 of access header 1602 is incremented in a DATA packet every time a data packet is issued from access processor 1410 to initiator terminal 1401.

(S2120)While initiator terminal 1401 reads data from storage medium 103, access processor 1403 sends an acknowledgment response (DATA-ACK) indicating that data is accurately read to access processor 1410. In the example in FIG. 22, access processor 1403 sends the DATA-ACK response after reading fourth data (DATA). The remaining size of an ACK payload of an ACK packet is 15 kB since data is received four times and the received data size is 30 kB.

Further, access processor 1403 sends the DATA-ACK response after reading sixth data (DATA). The remaining size of the ACK payload of the ACK packet is 0 kB in this case.

In addition, sending of this DATA-ACK may be predetermined number of times and sending timing of this DATA-ACK may be an arbitrary if during the acquisition of an access control right of initiator terminal 1401.

(S216) Initiator terminal 1401 which has received desired data from storage medium 103 of target terminal 1402 performs processing of releasing the access control right of storage medium 103. As already described, initiator terminal 1401 performs processing in S114 to S120 of releasing the access control right of storage medium 103 of target terminal 1402.

When the processing of releasing the access control right is finished, the access control right of storage medium 103 returns to target terminal 1402, and the state transits to a local access enabled state.

In addition, target terminal 1402 returned CMD Response and the first DATA in separate packets for response to a command from host processor 201, yet target terminal 1402 may return CMD Response and the first DATA included in the same packet to initiator terminal 1401.

The sequence in a case where initiator terminal 1401 normally makes read access to storage medium 103 of target terminal 1402 without an error has been described above.

### <2-5. Error Recovery Operation When Lack of Data>

Next, error recovery processing in a case where data lacks while the data is read will be described.

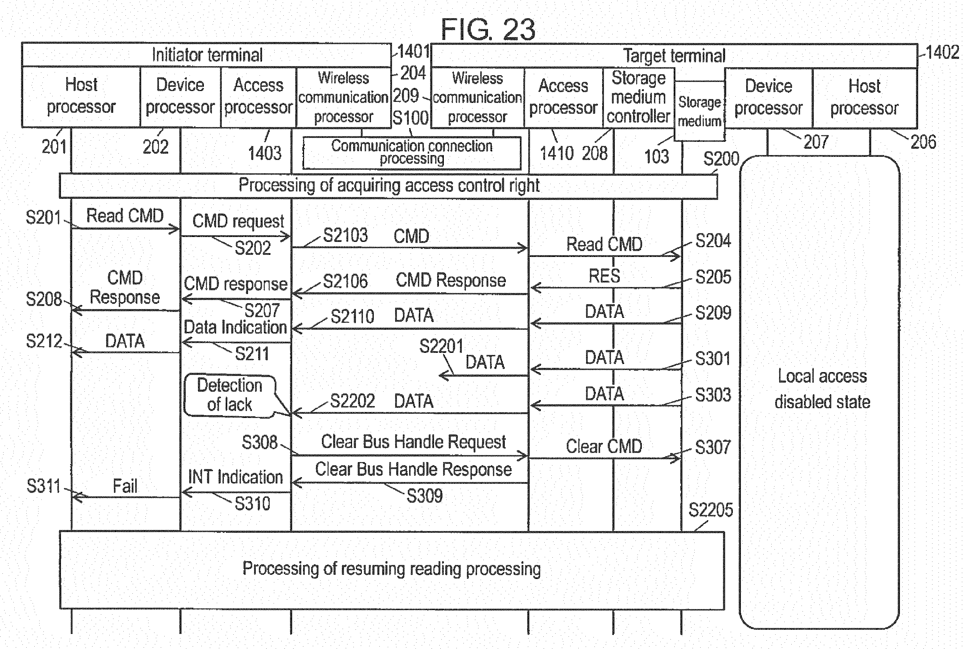

FIG. 23 is a view for explaining a sequence in a case where data lacks while initiator terminal 1401 reads data from storage medium 103 of target terminal 1402 via wireless communication. The substantially same operations as those of the first exemplary embodiment will be assigned the same step numbers. The wireless communication connection processing in S100, the access control right acquisition processing in S200, the processing in S201 to S208 and the processing in S209, S2110, S211 and S212 of transmitting the first DATA are as described above.

(S301) Second data (DATA) is issued from storage medium 103 to access processor 1410.

(S2201)Access processor 1410 stores the data read from storage medium 103, in a DATA packet, and issues the DATA packet to initiator terminal 1401 via wireless communication. In this regard, 1 is incremented, and 2 is stored as PSN 1605 of access header 1602. Here, the issued data lacks without being transmitted to initiator terminal 1401. Hence, the processing in S211 and S212 is not performed.

(S303) Third data (DATA) is issued from storage medium 103 to access processor 1410.

(S2202)Access processor 1410 stores the data read from storage medium 103, in a DATA packet, and issues the DATA packet to initiator terminal 1401 via wireless communication. In this case, 2 is incremented, and 3 is stored as PSN 1605 of access header 1602.

(S308) Access processor 1403 of initiator terminal 1401 interprets DATA from target terminal 1402. PSN 1605 of access header 1602 in a DATA packet is 3, and therefore it is detected that DATA whose PSN 1605 is 2 is not received.

Access processor 1403 of initiator terminal 1401 transmits a clear bus handle request (Clear Bus Handle Request) to target terminal 1402.

(S307) When receiving the clear bus handle request, access processor 1410 issues Clear CMD for clearing a read command, to storage medium 103, and returns storage medium 103 to a state where storage medium 103 can accept a command. Thus, storage medium 103 enters a waiting state for a next command. This Clear CMD is a command such as "CMD 12" when, for example, storage medium 103 is an SD card.

(S309) Further, access processor 1410 of target terminal 1402 transmits a clear bus handle response (Clear Bus Handle Response) to initiator terminal 1401.

(S310) Access processor 1403 of initiator terminal 1401 which has received the clear bus handle response notifies device processor 202 of an INT indication (INT Indication) indicating an interruption.

(S311) Device processor 202 notifies host processor 201 of that reading data has failed (Fail).

(S2205)Host processor 201 which has received this notice issues a read command (Read CMD) to device processor 202 to resume read processing. More specifically, the read processing described with reference to FIG. 22 is resumed.

As described above, by detecting lack of data by checking a number of a PSN of access header 1602, and by issuing a clear command to storage medium 103, initiator terminal 1401 can resume read processing.

### <2-6. Error Recovery Operation When Link Down (1)>

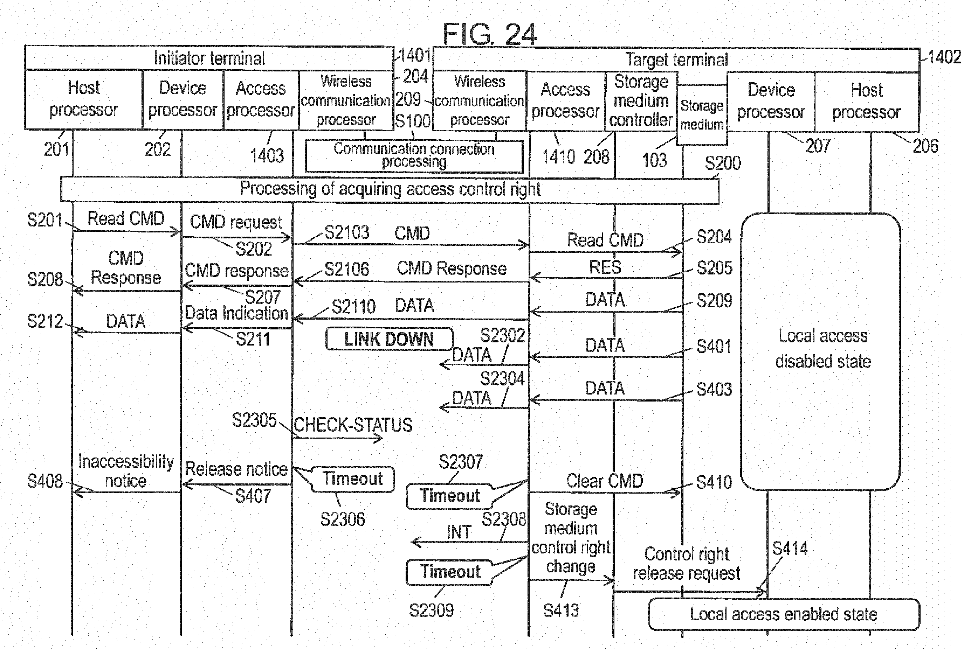

Next, a sequence in a case where a link down (LINK DOWN) which disables wireless communication during data read processing occurs will be described. FIG. 24 is a view for explaining a sequence in a case where a link down occurs while data is read from the storage medium via wireless communication. The substantially same operations as those of the first exemplary embodiment will be assigned the same step numbers. The wireless communication connection processing in S100, the access control right acquisition processing in S200, the processing in S201 to S208 and the processing in S209, S2110, S211 and S212 of transmitting the first DATA are as described above. It is assumed that the link down occurs after transmission of the first DATA is finished.

In this regard, access processor 1403 of initiator terminal 1401 and access processor 1410 of target terminal 1402 each have a timeout function of interrupting processing when a reply to a lately issued packet does not arrive within a predetermined time from a transmission destination.

(S401) Second data (DATA) is issued from storage medium 103 to access processor 1410.

(S2302)Access processor 1410 stores the data read from storage medium 103, in a DATA packet, and issues the DATA packet to initiator terminal 1401 via wireless communication. In this case, 1 is incremented, and 2 is stored as PSN 405 of access header 1602. In this regard, the issued data lacks without being transmitted to initiator terminal 1401. Hence, the processing in S211 and S212 is not performed.

(S403) Third data (DATA) is issued from storage medium 103 to access processor 1410.

(S2304)Access processor 1410 stores the data read from storage medium 103, in a DATA packet, and issues the data to initiator terminal 1401 via wireless communication. In this regard, 2 is incremented, and 3 is stored as PSN 1605 of access header 1602. Here, the issued data lacks without being transmitted to initiator terminal 1401. Hence, the processing in S211 and S212 is not performed.

(S2305)Access processor 1403 issues CHECK-STATUS to target terminal 1402 since data does not arrive. In the CHECK-STATUS packet, 0 is stored as PSN 1605 of access header 1602, and 2 which is a PSN to be expected next is stored as NEXT PSN 2003. Further, 37.5 kB which is an expected total data amount is stored as Remaining Size 2004.

(S2306)When not receiving a response to CHECK-STATUS (S2305) transmitted to target terminal 1402 even after waiting for a predetermined time, access processor 1403 determines that a timeout has occurred.

(S407) Access processor 1403 issues a storage medium release notice to device processor 202.

(S408) Device processor 202 issues a storage medium inaccessibility notice to host processor 201. Initiator terminal 1401 cannot access storage medium 103.

(S2307)Meanwhile, target terminal 1402 does not receive DATA-ACK or CHECK-STATUS in response to data transmitted to initiator terminal 1401, and therefore determines that the timeout has occurred.

(S410) Access processor 1410 issues Clear CMD for clearing a command to storage medium 103, and returns storage medium 103 to a state where storage medium 103 can accepts a command. Thus, storage medium 103 can accept a next command.

(S2308)Next, access processor 1410 issues INT to initiator terminal 1401 to interrupt processing.

(S2309)Since this INT also lacks due to a wireless communication link down and does not arrive at initiator terminal 1401 and there is no response from initiator terminal 1401, it is determined that the timeout has occurred.

(S413) Subsequently, access processor 1410 issues a storage medium access control right change request to storage medium controller 208.

(S414) Storage medium controller 208 issues an access control right release request to device processor 207, and thereby host processor 206 of target terminal 1402 can access storage medium 103.

Since the above processing is executed, when a link down which disconnects a wireless communication link between initiator terminal 1401 and target terminal 1402 occurs, and communication cannot be performed with each other, it is possible to return the access control right of storage medium 103 to target terminal 1402 by finishing processing of initiator terminal 1401 and target terminal 1402.

### <2-7. Error Recovery Operation When Link Down (2)>

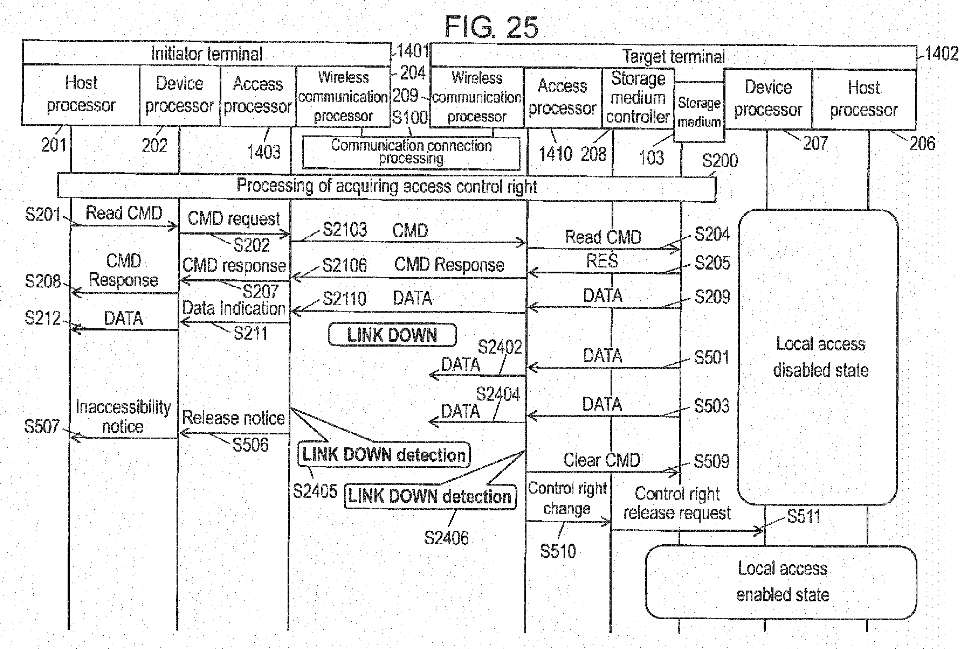

Further, another sequence in a case where a link down (LINK DOWN) which disables wireless communication during data read processing occurs will be further described. FIG. 25 is a view for explaining another sequence in a case where a link down occurs while data is read from the storage medium via wireless communication. The substantially same operations as those of the first exemplary embodiment will be assigned the same step numbers.

The wireless communication connection processing in S100, the access control right acquisition processing in S200, the processing in S201 to S208 and the processing in S209, S2110, S211 and S212 of transmitting the first DATA are as described above. It is assumed that the link down occurs after transmission of the first DATA is finished.

In this regard, access processor 1403 of initiator terminal 1401 and access processor 1410 of target terminal 1402 each have a function of managing a wireless communication link state.

(S501) Second data (DATA) is issued from storage medium 103 to access processor 1410.

(S2402)Access processor 1410 stores the data read from storage medium 103, in a DATA packet, and issues the DATA packet to initiator terminal 1401 via wireless communication. In this regard, 1 is incremented, and 2 is stored as PSN 1605 of access header 1602. Here, the issued data lacks without being transmitted to initiator terminal 1401. Hence, the processing in S211 and S212 is not performed.

(S503) Third data (DATA) is issued from storage medium 103 to access processor 210.

(S2404)Access processor 1410 stores the data read from storage medium 103, in a DATA packet, and issues the DATA packet to initiator terminal 1401 via wireless communication. In this case, 2 is incremented, and 3 is stored as PSN 1605 of access header 1602. Here, the issued data lacks without being transmitted to initiator terminal 1401. Hence, the processing in S211 and S212 is not performed.

(S2405) Access processor 1403 of initiator terminal 1401 detects a wireless communication link down.

(S506) When detecting the link down, access processor 1403 issues a storage medium release notice to device processor 202.

(S507) Device processor 202 issues a storage medium inaccessibility notice to host processor 201. Initiator terminal 1401 cannot access storage medium 103.

(S2406) Access processor 1410 of target terminal 1402 detects the wireless communication link down.

(S509) When detecting the link down, access processor 1410 issues Clear CMD for clearing a command, to storage medium 103, and returns storage medium 103 to a state where storage medium 103 can accept a command. Storage medium 103 can accept a next command.

(S510) Subsequently, access processor 1410 issues a storage medium access control right change request to storage medium controller 208.

(S511) Storage medium controller 208 issues the access control right release request to device processor 207, and thereby host processor 206 of target terminal 1402 can access storage medium 103.

According to the above processing, even when a wireless communication link down occurs, it is possible to detect a link down and recover an error. Further, when data does not arrive, storage medium 103 can accept a command, and, by returning an access control right, it is possible to avoid a situation that target terminal 1402 cannot access storage medium 103.

### <2-8. Effect>

As described above, in the present exemplary embodiment, initiator terminal 1401 has wireless communication processor 204 which connects with target terminal 1402 via wireless communication, and access processor 1403 which performs access protocol processing to get remote access to storage medium 103 included in the target terminal 1402. Access processor 1403 interrupts access when an error occurs during the access to the storage medium. Target terminal 1402 has storage medium 103, wireless communication processor 209 which connects with initiator terminal 1401 via wireless communication, and access processor 1410 which performs remote access protocol processing of permitting initiator terminal 1401 to make remote access to storage medium 103. When an error occurs while initiator terminal 1401 accesses storage medium 103, access processor 1403 interrupts the remote access.

Thus, it is possible to avoid an error by interrupting remote access when an error occurs.

Further, in initiator terminal 1401 according to the present exemplary embodiment, access processor 1403 transmits a packet for checking whether or not an error which occurs during the access to storage medium 103 is due to lack of read data. In target terminal 1402, when the error which occurs while initiator terminal 1401 accesses storage medium 103 is due to lack of read data, access processor 1410 clears a command issued to storage medium 103.

Thus, initiator terminal 1401 can resume read processing.

Further, in initiator terminal 1401 according to the present exemplary embodiment, access processor 1403 releases storage medium 103 from the access when there is no response within a predetermined time from target terminal 1402 during the access to storage medium 103, and finishes the remote access. In target terminal 1402, access processor 1410 clears a command issued to storage medium 103 when there is no response within a predetermined time from initiator terminal 1401 while initiator terminal 1401 accesses storage medium 103, and finishes the remote access to storage medium 103.

Thus, when a link down which disconnects a wireless communication link between initiator terminal 1401 and target terminal 1402 occurs, and communication cannot be performed with each other, it is possible to return the access control right of storage medium 103 to target terminal 1402 by finishing processing of initiator terminal 1401 and target terminal 1402.

### INDUSTRIAL APPLICABILITY

The present disclosure is useful for a technique of conducting a transaction by connecting a storage medium, included in an external terminal which can communicates with a local terminal, to the local terminal, in the same way as access to a storage medium included in the local terminal.

### REFERENCE MARKS IN THE DRAWINGS

- 100, 1400: wireless communication system
- 101, 1401: initiator terminal
- 102, 1402: target terminal
- 103: storage medium
- 201, 206: host processor
- 202, 207: device processor
- 203, 210, 1403, 1410: access processor
- 204, 209: wireless communication processor
- 205,211: wireless communication interface
- 208: storage medium controller
- 401: wireless communication header
- 402, 1602: access header
- 403: CMD payload
- 404: CSN
- 405, 1605: PSN
- 501: CMD Response payload
- 601: DATA payload
- 701,1901: ACK payload
- 702: CurrentCSN
- 801, 2001: CHECK-STATUS payload
- 802: CurrentCSN
- 803,2003: NextPSN
- 804, 1902, 2004: Remaining Size
- 901: INT payload
- 902: Event Type

## Claims

1. An initiator terminal comprising:
a wireless communication processor which connects with a target terminal via wireless communication; and
an access processor which performs access protocol processing to get remote access to a storage medium included in the target terminal,
wherein the access processor interrupts the access when an error occurs during the access to the storage medium.

2. The initiator terminal according to claim 1, wherein the access processor transmits a packet for checking whether or not the error which occurs during the access to the storage medium is due to lack of read data.

3. The initiator according to claim 1, wherein, when there is no response within a predetermined time from the target terminal during the access to the storage medium, the access processor releases the storage medium from the access and finishes the remote access.

4. A target terminal comprising:
a storage medium;
a wireless communication processor which connects with an initiator terminal via wireless communication; and
an access processor which performs remote access protocol processing of permitting the initiator terminal to make remote access to the storage medium,
wherein, when an error occurs while the initiator terminal accesses the storage medium, the access processor interrupts the remote access.

5. The target terminal according to claim 4, wherein, when the error which occurs while the initiator terminal accesses the storage medium is due to lack of read data, the access processor clears a command issued to the storage medium.

6. The target terminal according to claim 4, wherein, when there is no response within a predetermined time from the initiator terminal while the initiator terminal accesses the storage medium, the access processor clears a command issued to the storage medium, and finishes the remote access to the storage medium.

7. A method for interrupting access of an initiator terminal, the method comprising:
connecting with a target terminal via wireless communication;
performing access protocol processing to get remote access to a storage medium included in the target terminal; and
interrupting the access when an error occurs during the access to the storage medium.

8. A method for interrupting access of a target terminal, the method comprising:
connecting with an initiator terminal via wireless communication;
performing remote access protocol processing of permitting the initiator terminal to make remote access to the storage medium; and
interrupting the remote access when an error occurs while the initiator terminal accesses the storage medium.
